**Europäisches Patentamt**

**European Patent Office**

**Office européen des brevets**

(11) Publication number: **0 039 968**
**B1**

(12) **EUROPEAN PATENT SPECIFICATION**

(45) Date of publication of patent specification: **22.04.87**

(21) Application number: **81200472.9**

(22) Date of filing: **01.05.81**

(51) Int. Cl.⁴: **F 16 C 33/58,** F 16 C 35/06, B 60 B 35/18

(54) Wheel bearing assembly.

(30) Priority: **09.05.80 NL 8002688**

(43) Date of publication of application:
**18.11.81 Bulletin 81/46**

(45) Publication of the grant of the patent:
**22.04.87 Bulletin 87/17**

(84) Designated Contracting States:
**DE FR GB IT NL SE**

(56) References cited:
***none***

(73) Proprietor: **SKF Industrial Trading & Development Company B.V.**
**Kelvinbaan 16 P.O. Box 50**
**NL-3430 AB Nieuwegein (NL)**

(72) Inventor: **Merkelbach, Boy**
**Tolsteegplantsoen 22**
**Utrecht (NL)**

(74) Representative: **Merkelbach, B.**
**SKF Engineering & Research Centre B.V.**
**Kelvinbaan 16 P.O. Box 50**
**NL-3430 AB Nieuwegein (NL)**

EP 0 039 968 B1

Courier Press, Leamington Spa, England.

## Description

The invention relates to a wheel bearing assembly comprising a preloaded and adjusted rolling bearing unit which consists of an inner- and outer-ring each being homogeneous with an attachment flange and between which two rows of rolling elements are provided that are sealed-off against dirt and to which unit a homokinetic coupling is connected by welding the outer-ring of said coupling comprising a projecting part positioned inside the bearing and restricted by a shoulder which bears against the end-part of said bearing inner-ring.

A bearing assembly of this kind is disclosed in the US patent 3,757,883 and is primarily used for mounting the stearable wheels of a vehicle, in particular a vehicle with front-wheel drive, the assembly being ready for use as such and requiring only to be installed, since the bearing is pre-loaded, adjusted, furnished with a lubricant and sealed beforehand. The assembly is fastened to the vehicle by the attachment flange of the outer race, while the wheel hub is connected to the flange of the inner race.

In the known bearing assemblies, such as according to US patent 3,757,883 and UK patent 1298552 Fig. 5, a welded connection is used, whereby only comparatively little heat is generated. This welded connection is made between cylindrical annular parts projecting axially from the outer race of the homokinetic coupling and the inner race of the bearing, the end surfaces of which parts have equal dimensions and make contact with each other. However, the connection thus obtained between the bearing and the homokinetic coupling is comparatively weak, since the weld can only be made between the very end-part of the projection part of the coupling housing and a relative small part of the inner-ring, since the pitch diameter of the race ways is at least twice the overall axial width of the annular members, which means that for this type of bearing dimensions the cylindrical end-part of the coupling housing and the cooperating inner-ring must have a closely fit otherwise mis-alignment between both parts having such a large diameter will be introduced and thus mal-functioning fostered. In this type of assemblies it is obvious that a weld can only be made at the end-part of the cylindrical coupling housing abutting against the inner-ring. Moreover this known connection (US patent 3,757,883 and UK patent 1 298 552) requires high tolerances of the surfaces to be connected.

The object of the invention is to provide a bearing assembly of the type mentioned, having a very strong connection produced by welding between and positioning of bearing and homokinetic coupling parts.

This object is accomplished in that, in the bearing assembly according to the invention, said projecting part is tapered to converge outward relative to the outer-ring of said homokinetic coupling and the portion of the interior surface of the inner-ring of the bearing that encloses said projection is correspondingly tapered to diverge outward said projecting part being connected to said inner-ring by a weld encased between said bearing inner-ring and said projecting part, the weld having been made by electron beam or laser welding which energy beam has been directed from the open end of said inner-ring.

The connection thus produced between the bearing and the homokinetic coupling is very strong, since the tapered execution of both connection parts enables a larger connection-surface than is possible in the known assemblies whereby the closely fit between the cylindrical projecting part of the coupling housing part and bearing inner-ring prevents a deep laying weld between said parts. The claimed design on the contrary introduces the making of such a deep laying weld that obviously improves the connection.

If necessary, in order to be better able to absorb tangential forces in the assembly, on the exterior surface of the projecting part and the interior surface of the portion of the inner race enclosing that part, at least one set of mutually cooperating projections and recesses are provided.

Advantageously, inside said inner race an electronic measuring device is arranged, capable of measuring and indicating the working of the assembled parts.

A recess may also be made in the inside wall of the inner race for securing a fastening means for a hub cap or other wheel ornament.

The invention will be described in more detail with reference to the drawing, in which

Fig. 1 shows a bearing assembly according to the invention in cross section, and

Fig. 2 shows another embodiment of said assembly.

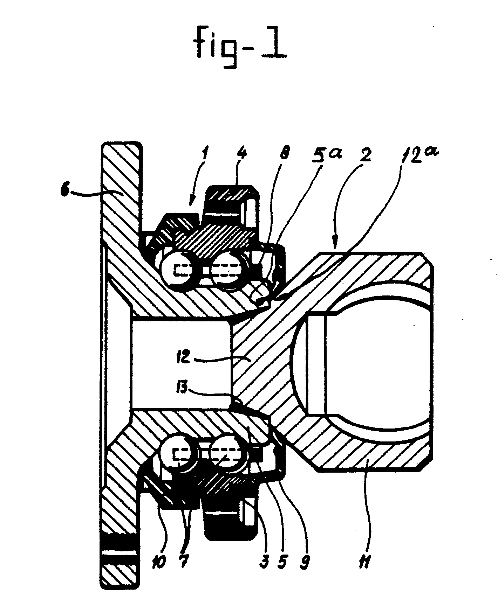

As shown in Fig. 1, the assembly comprises a ball bearing 1 and a homokinetic coupling 2 connected therewith. The bearing comprises an outer race ring 3 with a flange 4 integral therewith and an inner race ring 5 with a flange 6 integral therewith. Between the race rings 3 and 5, two rows of rolling elements 7 are adjusted and held separate from each other by a cage 8. There are also sealing members 9 and 10 on either side of said rolling elements 7, so that the bearing 1 forms a pre-loaded, adjusted, lubricated and sealed unit.

From the homokinetic coupling 2, only the outer ring 11 is shown, having a projecting portion 12 situated within the inner race 5 of the bearing, which portion 12 converges tapered outward relative to the ring 11. The portion of the interior surface of the inner race 5 that encloses this projecting portion 12 is correspondingly tapered, while a weld 13 produced by an electron or laser beam connects the projecting portion 12 to the inner race 5. The projection portion 12 positioned inside the bearing is restricted thereto by a shoulder 12a which bears against the end-part 5a of the bearing inner-ring 5.

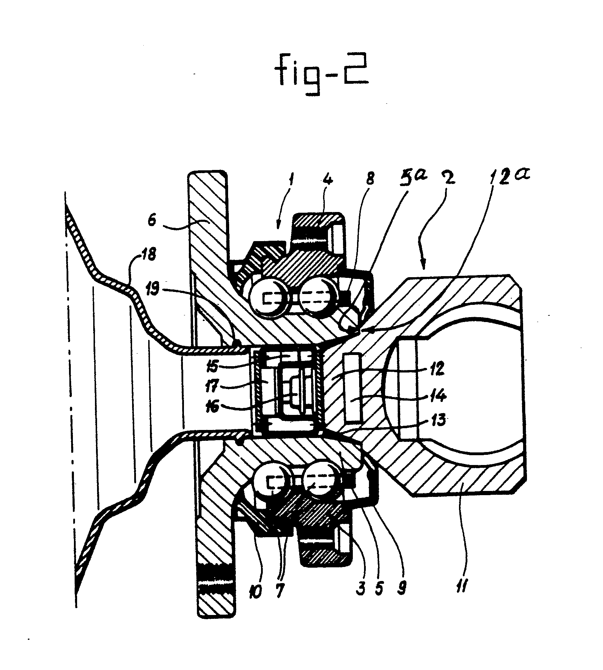

As shown in Fig. 2, projections 14 of triangular cross section may be formed additionally on the periphery of the projecting portion 12, to engage matching recesses in the interior surface of the inner race.

In the inner race, an electronic measuring means is arranged, for example comprising an electronic voltage comparator 16 and a chemical indicator 17, which changes color in each instance on occurrence of a shock impulse above a certain threshold value, so that the extent to which, within a given lapse of time, the indicator 17 has changed color, is a measure of the action of the assembly.

Advantageously also, a hub cap or other trim 18 can be secured to the fellow of the wheel with the aid of a fastening means (for example a bolt) located in a groove 19 in the bore of the inner race and capable of being fixed therein. In the example of Fig. 2, a projection on the hub cap 18 itself is the fastening means.

## Claims

1. Wheel bearing assembly comprising a preloaded and adjusted rolling bearing unit which consists of an inner- and outer-ring each being homogeneous with an attachment flange and between which two rows of rolling elements are provided that are sealed-off against dirt and to which unit a homokinetic coupling (2) is connected by welding the outer-ring (11) of said coupling comprising a projecting part (12) positioned inside the bearing and restricted by a shoulder (12a) which bears against the end-part (5a) of said bearing inner-ring, characterized in that said projecting part (12) is tapered to converge outward relative to the outer-ring (11) of said homokinetic coupling (2) and the portion of the interior surface of the inner-ring (5) of the bearing (1) that encloses said projection is correspondingly tapered to diverge outward said projecting part being connected to said inner-ring (5) by a weld encased between said bearing inner-ring (5) and said projecting part (12), the weld having been made by electron beam or laser welding which energy beam has been directed from the open end of said inner-ring (5).

2. Bearing assembly according to claim 1, characterized in that on the exterior surface of the projecting part (12) and the interior surface of the portion of the inner race (5) enclosing that part, at least one set of mutually cooperating projections (14) and recesses are provided.

3. Bearing assembly according to claims 1 or 2, characterized in that inside said inner race an electronic measuring device (15, 16, 17) is arranged, capable of measuring and indicating the working of the assembled parts.

4. Bearing assembly according to claims 1 or 3, characterized in that a recess (19) is formed inside the bearing inner race (5) to secure a fastening means for a hub cap (18) or other wheel ornament.

## Patentansprüche

1. Radlagereinheit, bestehend aus einer vorgespannten und eingestellten Wälzlagereinheit, welche sich aus einem jeweils einstückig mit einem Befestigungsflansch versehenen Innen- und Außenring zusammensetzt, zwischen denen zwei gegen Schmutz abgedichtete Reihen von Wälzkörpern vorgesehen sind, und an welcher eine homokinetische Kupplung (2) durch Schweißen angebracht ist, deren äußerer Ring (11) ein im Inneren des Lagers angeordnetes und durch eine an dem Stirnteil (5a) des Lagerinnenrings anliegende Schulter (12a) begrenztes Ansatzteil (12) aufweist, dadurch gekennzeichnet, daß das Ansatzteil (12) im Verhältnis zu dem äußeren Ring (11) der homokinetischen Kupplung (2) nach außen kegelförmig konvergiert und der diesen Ansatz einschließende Bereich der inneren Oberfläche des Innenrings (5) entsprechend nach außen kegelförmig divergiert, wobei das Ansatzteil an dem Innenring (5) durch eine zwischen dem Lagerinnenring (5) und dem Ansatzteil (12) eingeschlossenen Schweißnaht befestigt ist und die Schweißnaht, durch Elektronen- oder Laserschweißen hergestellt ist, wobei der Energiestrahlt vom offenen Ende des Innenrings aus gerichtet ist.

2. Radlagereinheit nach Anspruch 1, dadurch gekennzeichnet, daß auf der äußeren Oberfläche des Ansatzteils (12) und der inneren Oberfläche des dieses Teil einschließenden Bereichs des Innenrings (5) wenigstens einen Satz von gegenseitig zusammenwirkenden Vorsprüngen (14) und Ausnehmungen vorgesehen sind.

3. Radlagereinheit nach Anspruch 1 oder 2, dadurch gekennzeichnet, daß im Inneren des Innenrings eine elektronische Meßeinrichtung (15, 16, 17) zum Messen und Anzeigen der Arbeit der zusammengefügten Teile angebracht ist.

4. Radlagereinheit nach Anspruch 1 oder 3, dadurch gekennzeichnet, daß im Inneren des Innenrings (5) ein Vertiefung (19) zum Sichern eines Befestigungsmittels für eine Radkappe oder einer anderen Radverzierung eingeformt ist.

## Revendications

1. Montage de roulement de roue comprenant un roulement préalablement chargé et réglé qui se compose d'une bague intérieure et d'une bague extérieure solidiaires chacune d'un flasque de fixation et entre lesquelles sont prévues deux rangées d'éléments roulants qui sont rendus étanches aux saletés et auquel roulement est assemblé un accouplement homocinétique (2) par soudage de la bague extérieure (11) de cet accouplement comprenant une partie saillante (12) placée à l'intérieur du roulement et retenue par un épaulement (12a) qui porte contre la partie d'extrémité (5a) de la bague intérieure du roulement, caractérisé en ce que la partie saillante (12) est en forme de cône de manière à converger vers l'extérieur par rapport à la bague extérieure (11) de l'accouplement homocinétique (2), et la partie de la surface intérieure de la bague intérieure (5) du roulement (1) qui entoure cette partie saillante est également en forme de cône afin de diverger vers l'extérieur, cette partie saillante étant assemblée à la bague intérieure (5) par une soudure enfermée entre cette bague intérieure (5) du roulement et la partie saillante (12), la soudure ayant été exécutée par un faisceau d'électrons ou par un laser dont le faisceau d'énergie a été dirigé depuis l'extrémité ouverte de la bague intérieure (5).

2. Montage de roulement suivant la revendication 1, caractérisé en ce que sur la surface extérieure de la partie saillante (12) et sur la surface intérieure de la partie de la bague intérieure (5) qui entoure cette partie, au moins un groupe de saillies (14) et d'évidements conjugés sont prévus.

3. Montage de roulement suivant les revendications 1 ou 2, caractérisé en ce que à l'intérieur de la bague intérieure est monté un dispositif (15, 16, 17) de mesure électronique, capable de mesurer et d'indiquer le fonctionnement des pièces assemblées.

4. Montage de roulement suivant les revendications 1 ou 3, caractérisé en ce qu'un évidement (19) est formé à l'intérieur de la bague intérieure (5) du roulement afin de monter un moyen de fixation d'un chapeau (18) de moyeu ou autre enjoliveur de roue.

0 039 968

# fig-1

1

# fig-2